**Europäisches Patentamt**

**European Patent Office**

**Office européen des brevets**

(11) Publication number: **0 100 226**
**B1**

## (12) EUROPEAN PATENT SPECIFICATION

(45) Date of publication of patent specification: **08.07.87**

(21) Application number: **83304292.2**

(22) Date of filing: **25.07.83**

(51) Int. Cl.⁴: **B 60 C 11/08, B 60 C 11/00**

---

(54) Tyre for waste land travelling vehicle.

---

(30) Priority: **27.07.82 JP 130710/82**

(43) Date of publication of application:
**08.02.84 Bulletin 84/06**

(45) Publication of the grant of the patent:
**08.07.87 Bulletin 87/28**

(84) Designated Contracting States:
**DE FR GB IT**

(56) References cited:
**FR-A- 360 008**
**FR-A-1 548 533**
**FR-A-2 138 542**
**FR-A-2 423 355**
**FR-A-2 446 195**
**GB-A- 324 825**
**GB-A- 449 016**
**US-A-3 842 879**

(73) Proprietor: **SUMITOMO RUBBER INDUSTRIES LIMITED**
**No. 1-1, Tsutsui-cho 1-chome**
**Chuo-ku Kobe-shi Hyogo-ken (JP)**

(72) Inventor: **Tomoda, Hiroshi**
**3-1-2144, Takahama-cho**
**Ashiya-shi Hyogo-ken (JP)**
Inventor: **Tofukuji, Yasuo**
**2-11-2, Yamamuro**
**Fujimi-shi Saitama-ken (JP)**

(74) Representative: **Arthur, Bryan Edward et al**
**4 Dyers Buildings Holborn**
**London, EC1N 2JT (GB)**

Courier Press, Leamington Spa, England.

## Description

This invention relates to tyres. Tyres in accordance with this invention are suitable for use with all forms of wheeled vehicles including road vehicles such as motor cars, motor cycles, heavy transport and passenger vehicles as well as civil engineering vehicles, bicycles and aircraft. Tyres according to the invention are particularly suitable for fitting to vehicles intended to be operated over rough terrain, for example, waste land where it is desirable that the tyres of such vehicles should, when compared with conventional tyres, present an increased tractive force to prevent, or at least reduce any tendency of the vehicle to sink into muddy, sandy or soft ground.

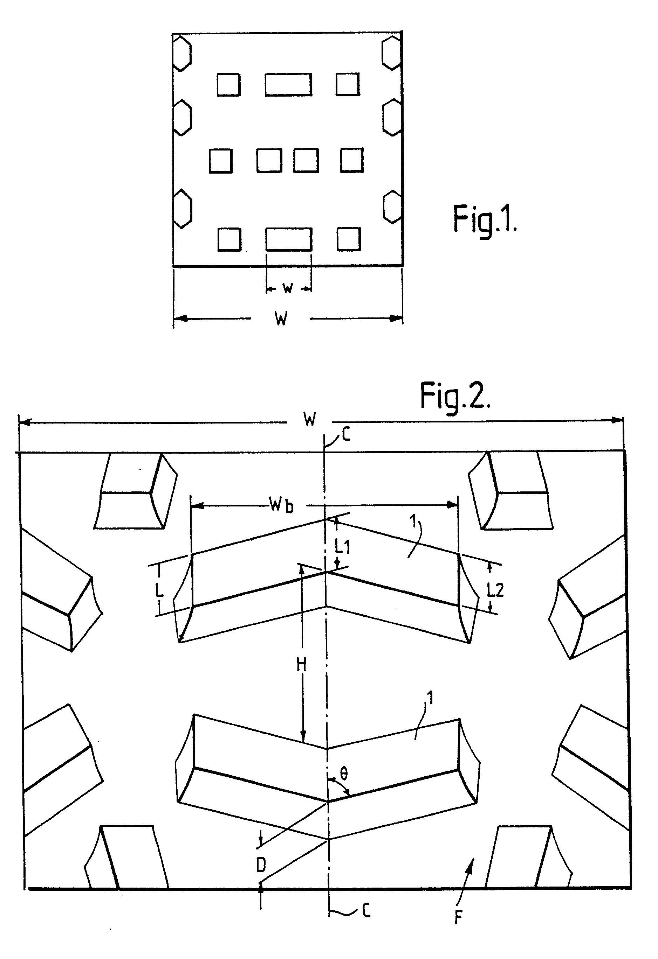

In conventional tread portions of tyres, especially tyres for fitting to motor cycles intended to operate over rough terrain, for example, when scrambling, the tread portion comprises a pattern of tread blocks as shown in Figure 1, which pattern is repeated around the periphery of the tyre. In the tread of Figure 1, which shows a conventional tyre, dimension (w) of each tread block measured axially of the tyre is usually less than 25% of width (W), that is, the total tyre tread width. Further, dimension (L) of a tread block measured in a peripheral direction is less than 2.5D, where D is the depth of the tread block.

In such conventional tread patterns, the tread blocks comprising a plurality of blocks are, as previously stated, repeated in a peripheral direction and, moreover, peripheral spaces between adjacent tread blocks are reduced to produce a prescribed rigidity and anti-wear performance of the tread. Consequently, when a vehicle fitted with conventionally treaded tyres travels on rough terrain and especially soft and muddy ground, mud held in the ground-contacting surface of the tyre is confined within the grooves between tread blocks so that traction performance is reduced markedly.

FR 360,008 discloses an anti-skid vehicle tyre having a tread comprising a series of thin chevron-shaped grooves the apices of the chevrons lying on the equatorial tread centre and the chevrons pointing in the same peripheral direction. This patent is directed to the problem of preventing skidding which arises when the rear of a vehicle slews to one side of the direction of travel. When fitted to the rear wheels of a vehicle, the chevron-shaped grooves of the tyres are so disposed that the two arms of each chevron are approximately orthogonal to the right and left directions of slewing respectively, and thereby offer maximum resistance to slewing.

It is an object of the present invention to provide a vehicle tyre, especially a motor cycle tyre which is suitable for use on rough terrain and possessing superior mud-repellent properties and having improved tractive performance at least when the vehicle is travelling along a substantially linear path.

GB 449,016 discloses a tyre comprising a tread portion and side walls the tread portion including a plurality of tread blocks distributed in peripherally spaced relationship with each other and disposed laterally relative to the equatorial tread centre of the tread portion, each tread block of the said plurality thereof having a width which is greater than 30% of the width of the tread portion of the tyre and each said tread block being chevron-shaped.

Tyres of the present invention are characterised in that said tread blocks are disposed symmetrically relative to the equatorial tread centre of the tread portion and in that alternate chevron-shaped blocks point in opposite directions.

The tyres of the present invention have the advantage of equally good traction performance in the forward and reverse driving directions. Tyres according preferred embodiments of the invention also possess a facility to expel earth and other materials which may tend to collect within gaps existing between adjacent blocks of tyre tread.

In the accompanying drawings: Figure 1 shows a prior art tread pattern, and Figure 2 is a partial perspective view of a tread pattern of a tyre in accordance with the invention.

One embodiment of the present invention will now be described by way of example with reference to Figure 2. In Figure 2, chevron or arrowhead-shaped tread blocks (1) are arranged in peripherally spaced relation about the equatorial tread centre C—C of equatorial tread face (F). The tread blocks 1 hava a width (Wb) considered in the axial direction of tyre of more than 30% and, preferably, within the range of 50—75% of tread width (W). The dimensions of both the tread width (W) and the block width (Wb) are the curved widths measured along the profile of the outer surface of tread. In a tyre according to the present invention, as mentioned above, since the wide arrowhead-shaped blocks (1) are arranged in axial direction of tyre about equatorial centre of equatorial face (F) of the tyre and, moreover since the tyre makes ground-contact via tread blocks (1) traction at the ground in the case of straight advancing travel is increased remarkably. In Figure 2 the included angle ($\theta$) relative to the equatorial centre C—C of the tyre is more than 45° and less than 90° and, preferably, within the range of 60°—80°. The value of the included angle $\theta$ affects traction performance and the performance is lowered as the value of the angle is decreased. However, since a lateral slipping trend is produced when angle ($\theta$) is increased to too great a value, it is desirable for angle $\theta$ to be less than 80°. The shape of the surface profile part of the tread blocks may be formed so that length (L) measured in the peripheral direction is of substantially constant shape in axial direction of tyre as shown in the figure, or it may be formed so that the length (L) is gradually decreased or increased from equatorial centre C—C of tyre at both sides. The length (L) of blocks 1 measured in a peripheral direction of tyre is $L_1$ on equatorial face of tyre and $L_2$ at both side parts and is desirably less than 1.5 times the depth (D) of the tread block 1 measured on the equatorial face of tyre so that entering operation of blocks into mud can be elevated. If (L) is increased or decreased as mentioned above, the mean value of (L) measured on the equatorial face should, desirably, also be less than 1.5 times the depth (D).

The mutual space (H) between blocks at equatorial centre C—C of tyre is preferably greater than 2.5 times of the depth (D) of the tread block 1 so as to improve entering operation of the tread blocks into, for example, mud. On the other hand where the mutual space (H) exceeds 6.0 times the depth (D) stability in operation is reduced. Accordingly, space (H) is preferably set within the aforesaid range of 2.5 to 6.0 times the depth (D).

Further, according to a preferred feature of the present invention the surface area (As) of the tread blocks is set within the range of 10—30% of the total tread surface area (At) of the tyre. Since the surface (As) of tread blocks of a tyre according to the present invention is smaller than of a conventional tyre, the rigidity of tread blocks tends to decrease. Therefore the rubber hardness of that part of the tyre containing the treads or at least the tread blocks *per se* is preferably comparatively high (e.g. higher than JIS hardness No. 75°).

The arrowhead-shaped blocks (1) may be arranged to extend across the whole width of tread part of the tyre. However, as shown in Figure 2, it may also be desirable for further tread blocks to be located in a region of the side wall of the tyre and extending over a region of about 1.4 times the tread width, thereby maintaining travel performance in the case of cornering, e.g. camber thrust.

Further, in one embodiment of the present invention, the arrowhead-shaped tread blocks may have an outline which curves gradually towards the side wall of the tyre and about the centre of the equatorial face. The depth (D) may also be decreased gradually toward the side part of tread and the angle (θ) of the arrowhead-shaped blocks relative to equatorial centre C—C of tyre.

The axial length (Wb) of the arrowhead-shaped tread blocks, and the space between blocks in peripheral direction may be varied so as to adopt a pattern shape using any combination of these factors.

The large peripheral spacing between the chevron or arrowhead-shaped tread blocks 1 ensures that mud-expellant performance on muddy road, sandy road, and soft road, especially in the case of straight advancing travel, is improved and traction performance is increased. Also since the tread block units of conventional shape are arranged at side part of tread, cornering performance is maintained, thus it is especially suitable as motorcycle's tyre. Further tyre of the present invention can be applied similarly to tyre for agricultural vehicle, ATV (vehicle for all lay of land) etc.

Practical Example 1.

The tread of a tyre according to the present invention and as shown in Figure 2 and the conventional tread shown in Figure 1 were applied to cross-ply tyre of 5.10-18 size, and these were fitted, in turn, to the rear wheel of the same vehicle (machine for MOTO cross of 250 ccm engine displacement) (cross-ply tyre of 3.00-21 size was attached to front wheel). The rider travelled practically 2 Km course on sandy road, and lap time was measured. In the case of attaching of tyre (Figure (2) of the present invention), the time per round (2 Km) was 2 min.-8.sec., while the case of attaching of conventional tyre (Figure 1), time per round was 2 min.-12 sec. Thus a difference of 4 sec. was found. Further, this difference is equivalent to about 70 m under travelling speed at 60 Km/h.

**Claims**

1. A tyre comprising a tread portion and side walls, the tread portion including a plurality of tread blocks (1) distributed in peripherally spaced relationship with each other and disposed laterally relative to the equatorial tread centre (C—C) of the tread portion, each tread block (1) of the said plurality thereof having a width (Wb) of at least 30% of the width (W) of the tread portion of the tyre, and each said tread block (1) being chevron-shaped, characterised in that said tread blocks (1) are disposed symmetrically relative to the equatorial tread centre (C—C) of the tread portion and in that alternate chevron-shaped blocks (1) point in opposite directions.

2. A tyre according to Claim 1 characterised in that the peripheral spacing (H) at the equatorial tread centre (C—C) between adjacent tread blocks (1) of said plurality is not less than 2.5 D, where D is the depth of the tread blocks (1) measured at the equatorial tread centre (C—C).

3. A tyre according to Claim 1 or 2 characterised in that the tread blocks (1) have a dimension, (L) measured in the peripheral direction which is 1.5 D, where D is the depth of the tread blocks (1) measured at the equatorial tread centre (C—C).

4. A tyre according to any one of Claims 1 to 3 characterised in that the included angle (θ) between each limb of a said chevron-shaped tread block (1) and the equatorial tread centre (C—C) is greater than 45° and less than 90°.

5. A tyre according to Claim 4 characterised in that the angle (θ) is within the range 60° to 80°.

6. A tyre according to any preceding claim characterised in that the total surface area (As) of the said tread blocks (1) is between 10% and 30% of the total tread surface area (At) of the tyre.

7. A tyre according to any preceding claims characterised in that a plurality of further tread blocks is disposed on at least a portion of the tread portion adjacent the side walls.

8. A tyre as claimed in any preceding claim which is a motor-cycle tyre.

## Patentansprüche

1. Reifen mit einer Profil- oder Lauffläche und Seitenwänden, wobei die Profilfläche eine Vielzahl von Profilstollen (1) aufweist, die mit gegenseitigem Abstand in der Reifenumfangsrichtung und seitlich der Äquatoriallinie (C—C) der Profilfläche zugeordnet sind und wobei jeder Profilstollen (1) der Vielzahl der Profilstollen eine Breite (Wb) von zumindest 30% der Breite (W) der Profilfläche des Reifens hat und jeder Profilstollen (1) pfeilförmig ist, dadurch gekennzeichnet, daß die Profilstollen (1) symmetrisch zur Äquatoriallinie (C—C) der Profilfläche angeordnet sind und eine von Profilstollen zu Profilstollen wechselnde Pfeilung in Umfangsrichtung des Reifens haben.

2. Reifen nach Anspruch 1, dadurch gekennzeichnet, daß der Abstand (H) zwischen zwei unmittelbar aufeinanderfolgenden Profilstollen (1) der Vielzahl der Profilstollen in der Äquatoriallinie (C—C) nicht kleiner als 2,5 D ist, wobei D die Höhe der Profilstollen (1) in der Äquatoriallinie (C—C) gemessen ist.

3. Reifen nach Anspruch 1 oder 2, dadurch gekennzeichnet, daß die Profilstollen (1) in Reifenumfangsrichtung gemessen, eine Abmessung (L) haben, die 1,5 D ist, wobei D die Höhe der Profilstollen (1) in der Äquatoriallinie (C—C) gemessen ist.

4. Reifen nach einem der Ansprüche 1 bis 3, dadurch gekennzeichnet, daß der Winkel (θ) zwischen jedem Schenkel jedes gepfeilten Profilstollens (1) und der Äquatoriallinie (C—C) größer als 45° und kleiner als 90° ist.

5. Reifen nach Anspruch 4, dadurch gekennzeichnet, daß der Winkel (θ) im Bereich zwischen 60° und 80° liegt.

6. Reifen nach einem jeden beliebigen der vorhergehenden Ansprüche, dadurch gekennzeichnet, daß der gesamte Oberflächenbereich (As) der Profilstollen (1) 10—30% der gesamten Profilfläche (At) des Reifens beträgt.

7. Reifen nach einem beliebigen der vorhergehenden Ansprüche, dadurch gekennzeichnet, daß eine Vielzahl weiterer Profilstollen zumindest einem Teil der Profilflächenbereiche zugeordnet ist, die an die Seitenwände anschließen.

8. Reifen nach einem beliebigen der vorhergehenden Ansprüche, dadurch gekennzeichnet, daß er der Reifen eines Motorrades ist.

## Revendications

1. Un bandage pneumatique comportant une partie de bande de roulement et des parois latérales, la partie de bande de roulement comportant une pluralité de blocs de roulement (1) distribués de façon à être espacés en périphérie les uns par rapport aux autres et disposés latéralement par rapport au centre équatorial de bande de roulement (C—C) de la partie de bande de roulement, chaque bloc de roulement (1) de ladite pluralité de blocs présentant une largeur (Wb) représentant au moins 30% de la largeur (W) de la partie de bande de roulement du bandage pneumatique, et chacun desdits blocs de roulement (1) étant disposé en chevron, caractérisé en ce que lesdits blocs de roulement (1) sont disposés symétriquement par rapport au centre équatorial de bande de roulement (C—C) de la partie de bande de roulement et en de que les blocs alternés (1) en forme de chevrons sont pointés dans des direction opposées.

2. Un bandage pneumatique selon la revendication 1 caractérisé en ce que l'espacement périphérique (H) au centr équatorial de bande de roulement, entre les blocs de roulement adjacents (1) de ladite pluralité, n'est pas inférieur à 2,5 D, D étant la profondeur des blocs de roulement (1) mesurée au centre équatorial de bande de roulement (C—C).

3. Un bandage pneumatique selon la revendication 1 ou 2 caractérisé en ce que les blocs de roulement (1) présentent une dimension (L), mesurée dans la direction périphérique, de 1,5 D, où D est la profondeur des blocs de roulement (1) mesurée au centre équatorial de bande de roulement (C—C).

4. Un bandage pneumatique selon l'une quelconque des revendications 1 à 3 caractérisé en ce que l'angle (θ) compris entre chaque branche dudit bloc de roulement (1) en forme de chevron et le centre équatorial de bande de roulement (C—C) est supérieur à 45° et inférieur à 90°.

5. Un bandage pneumatique selon la revendication 4 caractérisé en ce que l'angle (θ) est compris entre 60° et 80°.

6. Un bandage pneumatique selon l'une quelconque des revendications précédentes caractérisé en ce que la surface extérieure totale (As) desdits blocs de roulement (1) est comprise entre 10% et 30% de la surface extérieure totale de roulement (At) du bandage pneumatique.

7. Un bandage pneumatique selon l'une quelconque des revendications précédentes caractérisé en ce qu'une pluralité des blocs de roulement complémentaires est prévue sur une partie de la bande de roulement qui est adjacente aux parois latérales.

8. Un bandage pneumatique tel que revendiqué dans l'une quelconque des revendications précédentes et qui constitue un bandage pneumatique de motocycle.

# Fig.1.

# Fig.2.